(19) Europäisches Patentamt / European Patent Office / Office européen des brevets

(11) **EP 1 878 900 A2**

(12) **EUROPÄISCHE PATENTANMELDUNG**

(43) Veröffentlichungstag:
**16.01.2008 Patentblatt 2008/03**

(51) Int Cl.:
**F02D 41/22** *(2006.01)*

(21) Anmeldenummer: **07013463.0**

(22) Anmeldetag: **10.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **13.07.2006 AT 11882006**

(71) Anmelder: **GE Jenbacher GmbH & Co. OHG**
**6200 Jenbach (AT)**

(72) Erfinder:
• **Chvatal, Dieter**
**6200 Jenbach (AT)**
• **Schaumberger, Herbert**
**4655 Vorchdorf (AT)**
• **Hirzinger, Johann**
**6345 Kössen (AT)**

(74) Vertreter: **Torggler, Paul Norbert et al**
**Wilhelm-Greil-Strasse 16**
**6020 Innsbruck (AT)**

(54) **Verfahren zur Diagnose von fehlerhaften Betriebszuständen einer Brennkraftmaschine**

(57) Verfahren zur Diagnose von fehlerhaften Betriebszuständen, einer, insbesondere turboaufgeladenen, Brennkraftmaschine, insbesondere eines Gasmotors, dadurch gekennzeichnet, dass während des Betriebs der Brennkraftmaschine mindestens zwei, vorzugsweise mehrere, aktuelle Residuen für voneinander verschiedene Betriebsparameter der Brennkraftmaschine bestimmt werden, wobei jedes aktuelle Residuum als Maß für die Abweichung eines Ist-Wertes des jeweiligen Betriebsparameters von einem Ober eine Modellierung berechneten Modellwert des jeweiligen Betriebsparameters oder als Maß für die Abweichung eines Ist-Wertes des jeweiligen Betriebsparameters von einem Ist-Wert eines anderen Betriebsparameters bestimmt wird, und die Gesamtheit der so bestimmten aktuellen Residuen mit einer Gesamtheit von vorab beim Auftreten eines bekannten fehlerhaften Betriebszustandes bestimmten fehlertypischen Residuen verglichen wird und bei Übereinstimmung der Gesamtheit der aktuellen Residuen mit der Gesamtheit der fehlertypischen Residuen das Auftreten des bekannten fehlerhaften Betriebszustandes diagnostiziert und damit dessen Ursache erkannt wird.

*Fig. 9*

| $F$ | $r_1$ ($T_3$) | $r_2$ ($T_3$) | $r_3$ ($P_{el,3}$) | $r_4$ ($P_{el,4}$) | $r_5$ ($p_2$) | $r_6$ ($m_{verd}$) | $r_7$ ($p_1$) | $r_8$ ($\lambda_{gem}$) |
|---|---|---|---|---|---|---|---|---|
| — | 0 | 0 | 0 | 0 | 0 | 0 | 0 | 0 |
| #1 | +1 | +1 | -1 | -1 | +1 | +1 | -1 | -1 |
| #2 | -1 | -1 | +1 | +1 | +1 | +1 | -1 | -1 |
| #3 | -1 | -1 | +1 | +1 | +1 | +1 | -1 | -1 |
| #4 | +1 | +1 | +1 | +1 | +1 | +1 | +1 | +1 |
| #5 | -1 | -1 | -1 | -1 | -1 | -1 | -1 | -1 |
| #6 | -1 | -1 | -1 | -1 | -1 | +1 | +1 | +1 |
| #7 | +1 | +1 | +1 | +1 | +1 | -1 | -1 | -1 |

**Beschreibung**

Die Erfindung betrifft ein Verfahren zur Diagnose von fehlerhaften Betriebszuständen, einer, insbesondere turboaufgeladenen, Brennkraftmaschine, insbesondere eines Gasmotors.

Darüber hinaus betrifft die Erfindung auch eine geeignete Diagnoseeinrichtung zur Durchführung des Verfahrens und eine Brennkraftmaschine mit einer solchen Diagnoseeinrichtung.

Die Zuverlässigkeit von großen Brennkraftmaschinen, wie zum Beispiel großen Gasmotoren, und ein sehr hoher Wirkungsgrad sind meist die wesentlichen Qualitätsmerkmale beim Einsatz der Brennkraftmaschinen. Um optimale Wartungsintervalle bzw. Wartungseinsätze wählen zu können, sollten die durch den Motorbetrieb auftretenden nachteiligen zeitlichen Veränderungen, wie zum Beispiel Abnutzungen und Verschmutzungen, diagnostizier- sprich erkennbar sein. So sollten Wartungsarbeiten im Idealfall immer kurz vor dem Zeitpunkt durchgeführt werden, zu dem es aufgrund der zeitlichen Veränderungen zu einer schädlichen Auswirkung kommt. Bei den beim Stand der Technik bekannten fixen Service- bzw. Wartungsintervallen ist eine solche Erkennung bzw. Diagnose aber nicht gewährleistet. Es kann durchaus passieren, dass einerseits im Zuge von fixen Wartungsintervallen Bauteile des Motors zu früh getauscht werden, obwohl sie noch betriebsbereit wären. Andererseits kann es ohne entsprechende Diagnose des tatsächlichen Zustandes der Brennkraftmaschine durch Verschmutzungen, Verschleiß, vorzeitigen Ausfall von einzelnen Bauteilen oder dergleichen auch beim Einhalten von fixen Wartungsintervallen zum vorzeitigen Ausfall der Brennkraftmaschine kommen.

Für den reibungslosen und optimalen Betrieb einer Brennkraftmaschine sind zahlreiche Bestandteile des Motors von großer Bedeutung und sollten daher in einer möglichst automatisierten Anwendung bestmöglich überwacht werden. Dies sind zum Beispiel das Brennstoff- bzw. Gasdosierventil, der Ansauglufttemperatursensor, die Drosselklappe, die Zylindertemperatursensoren, das Zündsystem, das mechanisch reibungslose Funktionieren des Turboladers sowie des Verdichterumblaseventils. Darüber hinaus ist der Luftfilter zu überwachen, da es durch Verschmutzung zu erhöhtem Druckverlust oder durch Löcher und Leckagen zu verringertem Druckverlust kommen kann. Beim Turbolader bzw. Verdichter können Ablagerungen und erhöhte Lagerreibung zu vermindertem Verdichterwirkungsgrad und langsamerem dynamischen Verhalten führen. Der Gemischkühler ist zu überwachen, da seine Verschmutzung zu einem erhöhten Strömungswiderstand im Gemischeintrittskrümmer führt. Auch ein reibungsloses Funktionieren des Gemisch-Temperatursensors ist wichtig, da die Gemischtemperatur die Abgaszusammensetzung maßgeblich beeinflusst. Ablagerungen und Dichtigkeitsprobleme an den Motorventilen beeinflussen den volumetrischen Wirkungsgrad und damit die Gemischzusammensetzung sowie die Abgaswerte. Ablagerungen am Zylinderkopf und am Kolben haben nachteilige Auswirkungen auf den Verbrennungsprozess und den Wärmeübergang im Zylinder. Nicht zu Vergessen ist auch der Zustand der Abgasrohrleitungen, da sich durch Ablagerungen und Verstopfungen ein erhöhter Abgasgegendruck aufbaut.

Diese nicht abschließende Aufzählung von wesentlichen Einflussfaktoren auf den Betriebszustand der Brennkraftmaschine zeigt, dass ein insgesamt sehr komplexes System vorliegt und überwacht werden muss. Dabei tritt häufig das Problem auf, dass sich fehlerhafte Betriebszustände in verschiedenen Symptomen äußern und es bei Fehlerzuständen zu zahlreichen Wechselwirkungen kommt, die ein Erkennen der eigentlichen Fehlerursache häufig sehr schwierig gestalten.

Aufgabe der Erfindung ist es, ein Verfahren zur Diagnose bzw. zum Erkennen von fehlerhaften Betriebszuständen zu schaffen, dass es auch im Fall von komplexen Zusammenhängen ermöglicht, die Ursache des fehlerhaften Betriebszustandes zu erkennen.

Erreicht wird dies, indem während des Betriebs der Brennkraftmaschine mindestens zwei, vorzugsweise mehrere, aktuelle Residuen für voneinander verschiedene Betriebsparameter der Brennkraftmaschine bestimmt werden, wobei jedes aktuelle Residuum als Maß für die Abweichung eines Ist-Wertes des jeweiligen Betriebsparameters von einem über eine Modellierung berechneten Modellwert des jeweiligen Betriebsparameters oder als Maß für die Abweichung eines Ist-Wertes des jeweiligen Betriebsparameters von einem Ist-Wert eines anderen Betriebsparameters bestimmt wird, und die Gesamtheit der so bestimmten aktuellen Residuen mit einer Gesamtheit von vorab beim Auftreten eines bekannten fehlerhaften Betriebszustandes bestimmten fehlertypischen Residuen verglichen wird und bei Übereinstimmung der Gesamtheit der aktuellen Residuen mit der Gesamtheit der fehlertypischen Residuen das Auftreten des bekannten fehlerhaften Betriebszustandes diagnostiziert und damit dessen Ursache erkannt wird.

Das erfindungsgemäße Verfahren dient somit der Zustandsüberwachung und Fehlererkennung bei einer Brennkraftmaschine. Hierzu werden mindestens zwei, vorzugsweise mehrere, aktuelle Residuen herangezogen. Diese beschreiben jeweils die Abweichung eines Ist-Wertes des jeweiligen Betriebsparameters von einem anderen Ist-Wert eines anderen Betriebsparameters oder von einem über eine Modellierung berechneten Modellwert. Zur Auswertung werden die Residuen nicht einzeln, sondern in ihrer Gesamtheit herangezogen. Dies trägt der Erkenntnis Rechnung, dass eine Fehlerursache sich meist nicht nur eindeutig in einem, sondern in mehreren verschiedenen Symptomen äußert und damit nur in einer Gesamtheit von Symptomen bzw. Residuen identifizierbar ist. Im übertragenen Sinne wird somit in der Gesamtheit der aktuellen Residuen nach charakteristischen Fingerabdrücken von Fehlerursachen nämlich den fehlertypischen Residuen gesucht. Die für den jeweiligen fehlerhaften Betriebszustand bzw. für seine Ursache charakteristischen fehlertypischen Residuen werden vorab bestimmt. Dies kann zum Beispiel erfolgen, indem man den fehlerhaften Betriebszustand der Brennkraftmaschine gezielt herbeiführt und die dabei auftretenden Residuen als fehlertypische Residuen bestimmt.

Unter der Gesamtheit der Residuen ist dabei nicht zwingend immer dieselbe Anzahl und dieselbe Art von Residuen bzw. Betriebsparameternm zu verstehen. Es kann vielmehr auch vorgesehen sein, dass für jeden fehlerhaften Betriebszustand bzw. dessen Ursache über Versuche bestimmt wird, welche Residuen für den jeweiligen Fehler charakteristisch reagieren. Nur diese bilden dann die Gesamtheit der Residuen, die zur Diagnose des jeweiligen fehlerhaften Betriebszustandes herangezogen werden. Dies trägt der Tatsache Rechnung, dass für manche fehlerhaften Betriebszustände manche Residuen charakteristisch reagieren, andere aber nicht. Letztere werden daher auch nicht in die jeweilige Gesamtheit aufgenommen und damit zur Auswertung herangezogen. Die Gesamtheiten der auszuwertenden Residuen für zwei verschiedene fehlerhafte Betriebszuständen können in Zahl und Art der herangezogenen Residuen somit gleich sein oder aber sich auch voneinander unterscheiden.

Zur Vorgehensweise, wie die Gesamtheit der aktuellen Residuen mit der Gesamtheit der fehlertypischen Residuen verglichen wird, gibt es verschiedene Vorgehensweisen. Eine davon sieht vor, dass beim Vergleich der Gesamtheit der aktuellen Residuen mit der Gesamtheit der fehlertypischen Residuen jeweils jedes aktuelle Residuum jedes Betriebsparameters mit dem fehlertypischen Residuum desselben Betriebsparameters verglichen wird.

Das erfindungsgemäße Verfahren dient wie bereits einleitend ausgeführt der Zustandsüberwachung der Brennkraftmaschine. Um eine zeitliche Veränderung des Zustandes der Brennkraftmaschine erkennen zu können, kann diese durch mehrere mathematische Teilmodelle der Motorkomponenten mittels Modellierung abgebildet werden. Diese Motorteilmodelle werden vorzugsweise beim fehlerfreien Betrieb der Brennkraftmaschine gebildet. Sie dienen als Referenz für die anschließende Motorüberwachung. Die Modellwerte des jeweiligen Betriebsparameters beschreiben günstigerweise somit den fehlerfreien Betriebszustand der Brennkraftmaschine. Durch die mit der Zeit auftretenden Veränderungen beim Betrieb der Brennkraftmaschine kommt es zur Abweichung der aktuell bestimmten Ist-Werte des jeweiligen Betriebsparameters von den errechneten Modellwerten, woraus die erfindungsgemäßen Informationen über physikalische Änderungen am Motor abgeleitet werden können. Die Abweichung eines Ist-Wertes vom Modellwert ist an den Änderungen des Wertes des jeweiligen Residuums zu erkennen. Beim erfindungsgemäßen Verfahren werden die Residuen günstigerweise kontinuierlich oder nahezu kontinuierlich ermittelt. Diese Ermittlung kann zum Beispiel auf einer Differenzbildung basieren. In einer bevorzugten Ausführungsform ist vorgesehen, dass jedem Residuum, vorzugsweise genau, drei Werte zugeordnet werden können. Ein erster Wert beschreibt dabei, dass die Abweichung zwischen dem Ist-Wert des jeweiligen Betriebsparameters und dem Modellwert des jeweiligen Betriebsparameters oder dem Ist-Wert eines anderen Betriebsparameters innerhalb eines vorgebbaren Toleranzbereiches liegt. Der zweite und der dritte Wert signalisieren hingegen, dass der Ist-Wert des jeweiligen Betriebsparameters entweder unterhalb oder oberhalb eines vorgebbaren, um den Modellwert des jeweiligen Betriebsparameters oder den Ist-Wert des anderen Betriebsparameters herum angeordneten, Toleranzbereiches liegt. In dieser Ausführungsform wird also nur berücksichtigt, ob der Ist-Wert innerhalb des Toleranzbereichs liegt oder in welcher Richtung er davon abweicht. Wie weit er außerhalb des Toleranzbereichs liegt, wird nicht berücksichtigt. Im Gegensatz zu dieser Variante ist es aber durchaus auch denkbar, letztere Informationen weiter auszuwerten.

Als Ist-Werte für die jeweiligen Betriebsparameter werden günstigerweise beim Betrieb der Brennkraftmaschine, vorzugsweise kontinuierlich oder nahezu kontinuierlich, gemessene Messwerte herangezogen. Es ist aber auch möglich, die Ist-Werte des jeweiligen Betriebsparameters aus mindestens einem oder mehreren solcher Messwerte und/oder Stellgrößen der Brennkraftmaschine zu bestimmen bzw. zu berechnen.

Zur Realisierung des erfindungsgemäßen Verfahrens können unterschiedlichste Betriebsparameter und unterschiedlichste diese beschreibende Teilmodelle bzw. Modellierungen herangezogen werden. In der nachfolgenden Figurenbeschreibung wird ein Ausführungsbeispiel eines erfindungsgemäßen Verfahrens mit neun Teilmodellen und acht zu bestimmenden Residuen beschrieben. Dies ist aber nur ein Beispiel. Es sind auch Umsetzungen des erfindungsgemäßen Verfahrens mit mehr oder auch weniger und/oder anderen Residuen bzw. Betriebsparametern und Modellen möglich. Günstigerweise werden aber für erfindungsgemäße Verfahren mindestens vier, vorzugsweise mindestens sechs, Residuen zur Diagnose eines fehlerhaften Betriebszustandes herangezogen.

Die Figuren zeigen:

| Fig. 1 bis 6b | Darstellungen zu den Teilmodellen 1 bis 6, |
| Fig. 7 | eine schematische Darstellung eines Motors, für den die Teilmodelle des gezeigten Ausführungsbeispiels berechnet werden, |
| Fig. 8 | eine Darstellung zur Bestimmung der Toleranzbereiche und |
| Fig. 9 | eine beispielhafte Aufstellung von fehlertypischen Residuen für verschiedene fehlerhafte Betriebszustände in einer tabellarischen Darstellung. |

Im Nachfolgenden werden nun die Teilmodelle 1 bis 9 kurz beschrieben. Sie dienen überwiegend der Berechnung der mit den Ist-Werten zur Bestimmung der Residuen zu vergleichenden Modellwerte bzw. Schätzwerte der Betriebsparameter der Brennkraftmaschine. Aus den Teilmodellen 1, 2, 3, 6, 7, 8 und 9 gehen direkt Modellwerte hervor, die zur Residuenbestimmung herangezogen werden. Die restlichen Teilmodelle 4 und 5 dienen zur Berechnung von Eingangsgrößen bzw. Betriebsparametern für weiterführende Berechnungen für Teilmodell 6. Die zur Durchführung des erfindungsgemäßen Verfahrens vorgesehene Diagnoseeinrichtung besitzt eine Initialisierungsroutine, bei der alle für die Berechnung der Teilmodelle benötigten Modellparameter ermittelt werden, indem verschiedene Betriebszustände der Brennkraftmaschine angefahren werden. Dieser Vorgang wird Modellparametrierung genannt. Die Modellparametrierung wird vorzugsweise manuell gestartet. Die berechneten Modellparameter können nach ihrer Berechnung dann zum Beispiel in einer eigenen Parameterdatei abgespeichert werden. Wenn die Identifikationsbedingungen durch Störeinflüsse negativ beeinflusst werden, wird dies automatisch erkannt und die Initialisierung wird fortgesetzt bis die erforderte Modellgüte erreicht ist.

Die Diagnoseeinrichtung enthält im Gegensatz zu vielen beim Stand der Technik bekannten Einrichtungen aus dem Automobilbereich keine Luftmassenstrommessung. Luft-, Gas-, Abgas- und Gemischmassenströme zu und von der Brennkraftmaschine werden aus den vorhandenen Informationen, wie Ladedruck $p_{2'}$, abgegebene Leistung $P_{el}$ und zugeführte Gasmenge $\dot{m}_{gas}$ errechnet. Bei der automatischen Referenzmodellbildung, also bei der Modellparametrierung, werden nur Modellparameter zugelassen, die den physikalischen Gegebenheiten genügen. Zu diesem Zweck werden die Modelle in Form von Kennfeldern visualisiert.

Zur Umsetzung des erfindungsgemäßen Verfahrens werden folgende Messwerte verwendet:

| | |
|---|---|
| $P_{el}{}^*$ | Motorleistung [kW] |
| $p_{2'}{}^*$ | Ladedruck [bar] |
| $T_3{}^*$ | mittlere Abgastemperatur [˚C] |
| $T_{3,c}{}^*$ | Einzel-Zylindertemperatur (mit Zählindex c) [˚C] |
| $T_2{}^*$ | Gemischtemperatur nach Gemischkühler [˚C] |
| $T_1{}^*$ | Luftansaugtemperatur [˚C] |
| $p_1{}^*$ | Luftansaugdruck [bar] nach Gasdosierventil |
| $T_{ol}{}^*$ | Motoröltemperatur [˚C] |
| $T_{MKW}{}^*$ | Motorkühlwassertemperatur [˚C] |
| $n_{lsl}{}^*$ | Motordrehzahl [U/min] |

Darüber hinaus kommen folgende in der Motorsteuerung wie an sich bekannt berechnete Stellgrößen zum Einsatz:

| | |
|---|---|
| $\alpha_{ubv}$ | Umblaseventilstellung [%] |
| $\alpha_{DK}$ | Drosselklappenstellung [%] |
| $ZZP$ | Zündzeitpunkt [˚ vOT] |
| $\dot{m}_{gas}$ | Gasmenge [kg/s] |
| $P_{el,soll}$ | Sollwert Motorleistung [kW] |
| $p_{2',soll}$ | Sollwert Ladedruck [bar] |
| $\lambda_{gem}$ | eingestellter λ-Wert für das Brennstoff-Luft-Gemisch |

Zusätzlich werden noch folgende Motorparameter verwendet:

| | |
|---|---|
| $H_u$ | Heizwert des zu verbrennenden Treibgases [J/kg] |
| $Z_{zyl}$ | Zylinderanzahl des Motors [1] |
| $V_{Hub}$ | Hubvolumen eines Zylinders [m$^3$] |

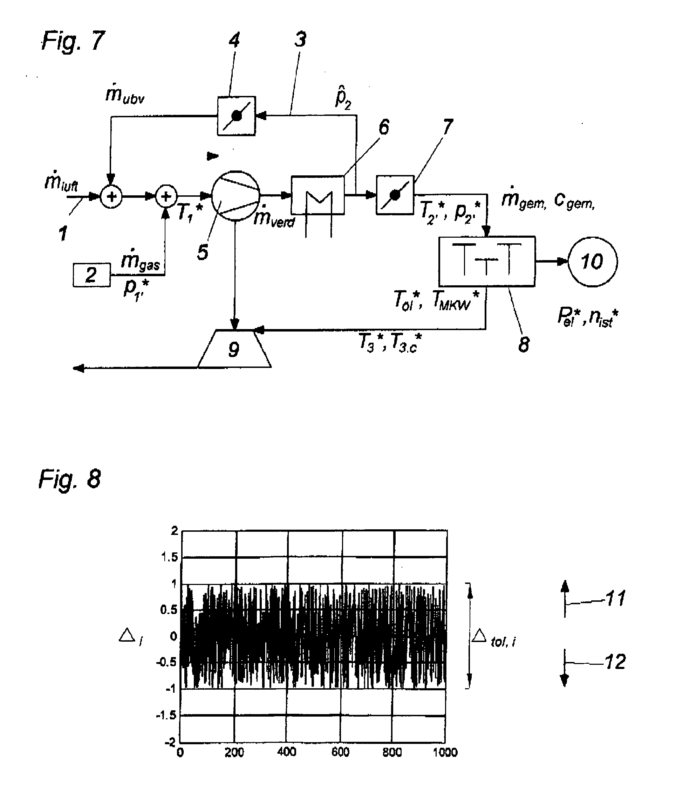

Fig. 7 zeigt ein Motorschema einer an sich bekannten turbogeladenen Brennkraftmaschine in Form eines Gasmotors mit einem Lufteinlass 1, einer Brenngasdosiereinrichtung 2 und einer Umblaseleitung 3 mit Umblaseventil 4. Die Umblaseleitung 3 führt um den Verdichter 5 des Turboladers und den Gemischkühler 6 herum. Anschließend wird das Brenngas-Luft-Gemisch durch die Drosselklappe 7 den Zylindern des Kurbelgehäuses 8 zugeführt. Das aus den Zylindern austretende Abgas treibt die Turbine 9 des Turboladers an. Die in dieser Weise schematisch dargestellte Brennkraftmaschine treibt den Generator 10 an. Die in Fig. 7 mit * gekennzeichneten Messwerte können mit handelsüblichen Sensoren gemessen werden. Die restlichen in Fig. 7 genannten Parameter werden mit den nun im Folgenden erläuterten Teilmodellen berechnet.

Teilmodell 1:

Dieses Teilmodell dient der Berechnung der mittleren Abgastemperatur $\hat{T}_3$ (t) aller Zylinder und dient als Grundlage für die Berechnung der Residuen $r_1$ und $r_2$ und hat die im Folgenden erläuterte Struktur. Es handelt sich um ein nichtlineares dynamisches Modell 3. Ordnung unter Berücksichtigung von vorhandenen Verzögerungen bzw. Totzeiten zwischen den Eingängen und dem Ausgang. Die Totzeiten können durch Messungen ermittelt werden. Dieses Modell ist in Fig, 1 schematisch dargestellt und wird auf folgende Weise parametriert:

Die Parametrierung erfolgt durch die von der Initialisierungsroutine vorgegebenen Verläufe für die Eingänge $P_{el,soll}$, *ZZP* und $p_{2', soll.}$ Der Motor wird dabei mittels Sollwertvorgabe an die Motorsteuerung in die entsprechenden Lastpunkte gebracht. Diese Lastpunkte werden von der Initialisierungsroutine automatisch berechnet und über einen Kommunikationskanal an die Motorsteuerung geschickt. Eine mögliche Ausführungsform ist die Verwendung eines OPC-Servers und OPC-Clients.

Die angefahrenen Arbeitspunkte sind über den gesamten für den Motor typischen bzw. möglichen Lastbereich gleichmäßig zu verteilen.

Die Eingänge *ZZP*, $P_{el}$ und $p_{2'}$ werden im Modell um die jeweiligen Totzeiten $T_{t1}$, $T_{t2}$ und $T_{t3}$ verzögert im Modell verwendet. Ein Schätzwert $\hat{T}_3$ für die aktuelle Abgastemperatur zum Zeitpunkt t lässt sich durch ein dynamisches Modell, das die vergangenen Eingänge und die vergangenen Abgastemperaturen berücksichtigt, berechnen. Im Folgenden ist eine mögliche Ausführungsform mit Verwendung eines neuronalen Netzes beschrieben:

Darin werden folgende Symbole verwendet:

| | |
|---|---|
| $z_m$ | Modelleingang |
| m | Zählindex für die Eingänge |
| $u_n$ | Neuronenausgang des hidden Layer Neurons n |
| $x_n$ | Summe der gewichteten Eingänge, Eingang für das Neuron n |
| $b_n\{1\}$ | Biasterme der Neuronen mit der Numerierung n. Das sind 8 Modellparameter, durch Netztraining bestimmt. Der Index {1} bezeichnet die Eingangsschicht. |
| $IW_{nm}$ | Input Weight des Eingangs m zum Neuron n (das sind m x n, also 12x8=96 Modellparameter, welche durch Netztraining bestimmt werden) |
| $LW_n$ | Layer Weight des Neurons n |
| n | Zählindex für die Neuronen |
| $b\{2\}$ | Bias des Output Layers. Dies ist ein Modellparameter, welcher durch Netztraining bestimmt wird. Der Index {2} bezeichnet den Biasparameter der Ausgangsschicht. |
| $T_s$ | Abtastzeit der Abgastemperaturmessung |
| $T_{t1...3}$ | Totzeit der jeweiligen Eingangsgrößen ZZP, $p_{2'}$ und $P_{el}$. |

Bei der Bildung eines Abgastemperaturmodells 3. Ordnung ergibt sich eine Anzahl von 12 Netzwerkeingängen für $z_m$:

$z_1$, $z_2$, $z_3$: 3 vergangene Werte des Zündzeitpunkts

$$z_1 = ZZP(t - T_s - T_{t1})$$

$$z_2 = ZZP(t - 2T_s - T_{t1})$$

$$z_3 = ZZP(t - 3T_s - T_{t1})$$

$z_4$, $z_5$, $z_6$: 3 vergangene Werte des Ladedrucks

$$z_4 = p_{2'}(t - T_s - T_{t2})$$

$$z_5 = p_2{}^*(t\text{-}2T_s\text{-}T_{t2})$$

$$z_6 = p_2{}^*(t\text{-}3T_s\text{-}T_{t2})$$

$z_7$, $z_8$, $z_9$: 3 vergangene Werte der Generatorlast

$$z_7 = P_{el}{}^*(t - T_s\text{-}T_{t3})$$

$$z_8 = P_{el}{}^*(t\text{-}2T_s\text{-}T_{t3})$$

$$z_9 = P_{el}{}^*(t\text{-}3T_s\text{-}T_{t3})$$

$Z_{10}$, $Z_{11}$, $Z_{12}$: 3 vergangene Werte des Abgastemperatur

$$z_{10} = T_3{}^*(t - T_6)$$

$$z_{11} = T_3{}^*(t\text{-}2T_6)$$

$$z_{12} = T_3{}^*(t\text{-}3T_6)$$

Die aktuelle mittlere Abgastemperatur $\hat{T}_3(t)$ wird in 3 Schritten berechnet:

$$x_n = \sum_{m=1}^{12}\left[IW_{nm} \cdot z_m + b_n\{1\}\right]$$

Eingang in das Neuron n.

$$u_n = \frac{2}{1 + e^{-2x_n}} - 1$$

Tansig-Aktivierungsfunktion des hidden Layers.

$$\hat{T}_3(t) = \sum_{n=1}^{8} LW_n \cdot u_n + b\{2\}$$

Prädiktion der Abgastemperatur.

Teilmodell 2:

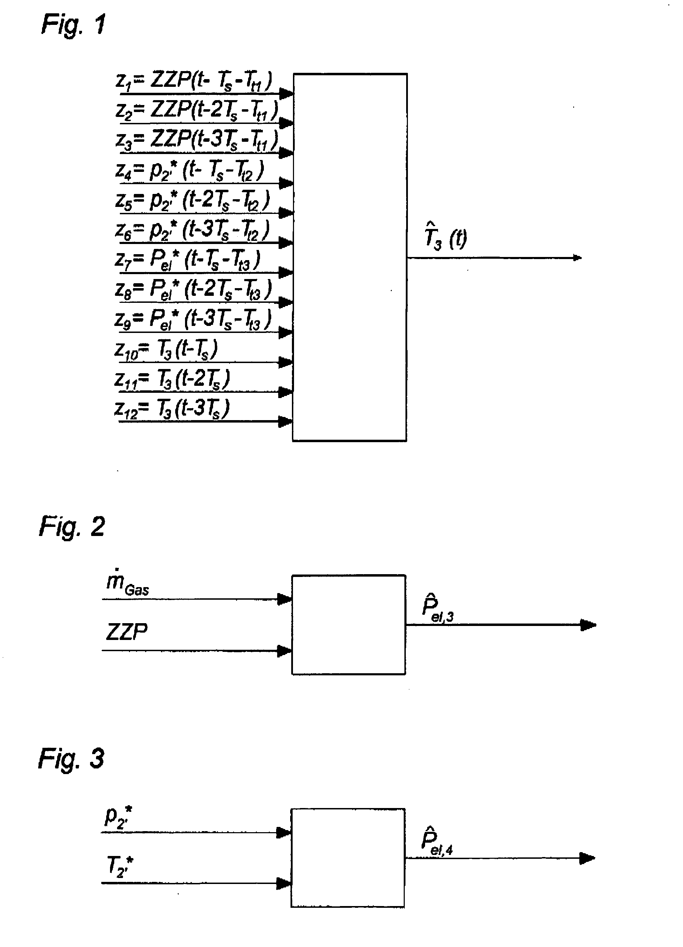

Dieses Teilmodell dient der Berechnung eines Schätzwertes $\hat{P}_{el,3}$ der elektrischen Leistung und fließt in die Bestimmung des weiter unten genannten Residuums $r_3$ ein. Eine Skizze zu diesem Teilmodell findet sich in Fig. 2.

Folgende Modellstruktur wird dem Verlauf der elektrischen Leistung $\hat{P}_{el,3}$ zugrunde gelegt. Dies entspricht einer Ebene im 3-dimensionalen Raum mit einem gemischten Term.

Der Schätzwert $\hat{P}_{el,3}$ für die elektrische Leistung wird aus der vorgegebenen Brennstoffmenge und dem Zündzeitpunkt berechnet:

$$(0.1) \quad \hat{P}_{el,3} = k_{2.1} \cdot \dot{m}_{gas} \cdot Hu + k_{2.2} \cdot ZZP + k_{2.3} \cdot \dot{m}_{gas} \cdot ZZP + k_{2.4}$$

Mittels Least-Square-Anpassung werden die Modellparameter $k_{2,1}$ bis $k_{2.4}$ ermittelt.

Teilmodell 3:

Mit diesem Teilmodell wird als Grundlage für die Berechnung des weiter unten genannten Residuums $r_4$ ein weiterer Schätzwert $\hat{P}_{el,4}$ für die elektrische Leistung berechnet. Das Teilmodell ist in Fig. 3 dargestellt,

Durch die Motorregelung wird bei einer aktuellen Motorleistung und einer aktuellen Gemischtemperatur ein Ladedruck eingeregelt. Die dafür nötige Gasmenge hängt also vom Motorwirkungsgrad und von der Gasqualität ab. Diese Information wird genützt um eine Berechnung eines Schätzwertes $\hat{P}_{el,4}$ für die aktuelle Motorleistung bzw, elektrische Leistung zu erhalten.

Folgende Modellstruktur wird der Abbildung der Gemischdichte auf die elektrische Leistung zugrunde gelegt. Die Gemischdichte wird aus Ladedruck und Gemischtemperatur berechnet.

$$\hat{P}_{el,4} = k_{3.1} \cdot \rho_{2'}^2 + k_{3.2} \cdot \rho_{2'} + k_{3.3}$$

$$\rho_{2'} = \frac{\dot{p}_{2'}}{R_{gem} \dot{T}_{2'}}$$

Mittels Least-Squares-Fitting beim Einmessvorgang werden die drei Modellparameter $k_{3.1}$ bis $k_{3.3}$ ermittelt. Die Gaskonstante $R_{gem}$ für das Brennstoff-Luft-Gemisch kann mit Hilfe des weiter unten berechneten $C_{gem}$ bestimmt werden.

Da es sich bei den Messwerten $p_{2'}^*$, $T_{2'}^*$ und $P_{el}^*$ um geregelte Größen handelt kann so eine Abweichung der Sollwerte für den Ladedruck sehr zuverlässig erkannt werden. Eine neue Parametrierung der Teilmodelle ist dann notwendig,

Teilmodell 4:

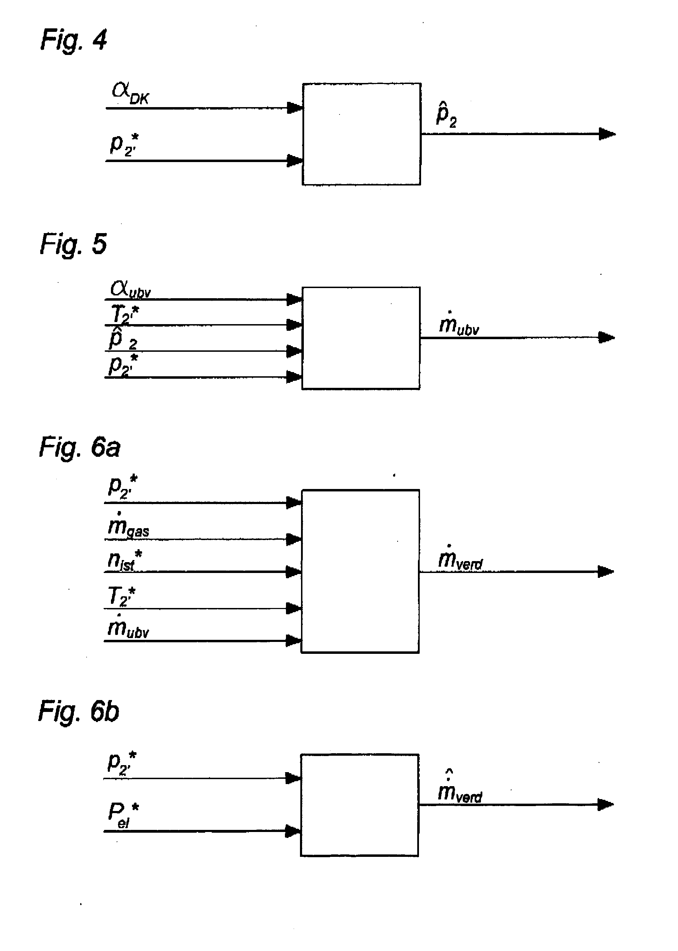

Hier geht es um die Berechnung eines Schätzwertes für den Druck $\hat{p}_2$ vor der Drosselklappe. Dieses Modell ist in Fig. 4 skizziert. Der Druck vor der Drosselklappe wird nicht gemessen. Für die Berechnung des Massenstromes $\dot{m}_{ubv}$ über das Umblaseventil in Teilmodell 5 wird jedoch eben dieser Druck $\hat{p}_2$ benötigt. Um dieses Modell zu identifizieren werden Prüfstandsdaten von $\hat{p}_2$ und $p_{2'}^*$ sowie $\alpha_{DK}$ verwendet. Diese Daten müssen für jeden Typen von verwendeter Drosselklappe vor Einbau in den Motor ermittelt werden.

Die Modellparameter werden mittels Least-Squares-Fitting angepasst. Durch die Verwendung von quadratischen Termen lässt sich eine sehr gute Genauigkeit über den gesamten Arbeitsbereich der Drosselklappe erzielen.

o = Abtastschritt des diskreten Messzeitpunkts

$$\Pi(o) = \frac{\hat{p}_2(o)}{\dot{p}_{2'}(o)}$$

bezeichnet das Druckverhältnis vor und nach der Drosselklappe. $\Pi$ (o) berechnet sich aus:

$$\Pi\ (o) = -k_{4.1} \cdot \Pi\ (o\text{-}1) - k_{4.2} \cdot \Pi^2\ (o\text{-}1) + k_{4.3} \cdot \alpha_{DK}{}^2\ (o\text{-}1) + k_{4.4} \cdot \alpha_{DK}\ (o\text{-}1)$$

woraus

$$\hat{p}_2\ (o) = \Pi(o) \cdot p_{2'}{}^*\ (o)$$

berechnet werden kann.

Damit steht der benötigte Druck vor der Drosselklappe $\hat{p}_2$ rechnerisch zur Verfügung und kann zur Berechnung des Massenstromes $\dot{m}_{ubv}$ über das Umblaseventil 4 verwendet werden.

Teilmodell 5:

Dieses Teilmodell dient der Berechnung des Massenstroms $\dot{m}_{ubv}$ in der Überströmleitung 3, wie dies in Fig. 5 skizziert ist. Der Massenstrom $\dot{m}_{ubv}$ ist als Eingangsgröße für die Istwertberechnung bei Teilmodell 6 von Interesse und wird in Abhängigkeit der Klappenstellung $\alpha_{ubv}$ und des berechneten Druckes $\hat{p}_2$ (siehe Teilmodell 4) berechnet. Außerdem besteht eine Abhängigkeit zwischen Gemischkonzentration am Motoreintritt und Umblaseventilstellung.
Die Berechnung erfolgt durch die aus der Literatur bekannte Drosselgleichung. Als einziger Anpassungsfaktor ist $k_{5,1}$ mittels Herstellerdatenblätter anzupassen.

$$\dot{m}_{ubv} = k_{5.1} \cdot A_{th} \cdot \hat{p}_2 \cdot \sqrt{\frac{2}{R_{gem} \cdot T_{2'}^{*}}} \cdot \Psi \quad \text{für} \quad \Psi = \sqrt{\frac{k}{k-1}\left[\left(\frac{p_{2'}^{*}}{\hat{p}_2}\right)^{\frac{2}{\kappa}} - \left(\frac{p_{2'}^{*}}{\hat{p}_2}\right)^{\frac{\kappa+1}{\kappa}}\right]}$$

$A_{th}$ ist die freie Querschnittsfläche des Strömungskanals in dem sich die Klappe des Umblaseventils 4 befindet. $A_{th}$ berechnet sich aus $\alpha_{ubv}$ und dem Gesamtöffnungsquerschnitt $A_o$ mit $A_{th} = A_o\ (1\text{-}\cos\alpha_{ubv})$. $\kappa$ ist dabei der Isotropenexponent, der für Gasgemische aus Tabellen der Standardliteratur entnommen werden kann.

Teilmodell 6:

Mit diesem Teilmodell wird der Verdichtermassenstrom als Betriebsparameter und damit der Verdichter 5 überwacht. Der Ist-Wert $\dot{m}_{verd}$ des Verdichtermassenstromes wird dabei nicht direkt gemessen, sondern aus verschiedenen Messwerten, der Stellgröße $\dot{m}_{gas}$ sowie dem mit Teilmodell 5 bestimmten $\dot{m}_{ubv}$ berechnet. Die Berechnung von $\dot{m}_{verd}$ erfolgt wie in Fig. 6a skizziert nach der Formel:

$$\dot{m}_{verd} = \dot{m}_{gas} + \dot{m}_{ubv} + \dot{m}_{luft}$$

wobei

$$\dot{m}_{\text{luft}} = \dot{m}_{\text{gas}} \, \frac{\hat{c}_{gem} + 1}{\hat{c}_{gem}}, \quad \hat{c}_{gem} = \frac{\dot{m}_{gas}}{\dot{m}_{gem}}, \quad \dot{m}_{gem} = \frac{\dot{p}_{2'}}{R_{gem} T_{2'}^{*}} \cdot \frac{\dot{n}_{ist}}{60} \cdot z_{zyl} \cdot V_{Hub} \cdot \eta_{vol}$$

Dabei sind:

$n_{ist}^{*}$   Drehzahl in U/min,
$V_{Hub}$   Hubvolumen eines Zylinders in m$^3$
$\eta_{vol}$   mittlerer volumetrischer Wirkungsgrad, dessen Bestimmung für die jeweilige Brennkraftmaschine gemäß des Standes der Technik erfolgt.

Dieser so berechnete Ist-Wert $\dot{m}_{\text{verd}}$ des Verdichtermassenstroms wird im weiter unten beschriebenen Residium $r_6$ einem über ein parametriertes Modell berechneten Modell- bzw. Schätzwert $\hat{\dot{m}}_{\text{verd}}$ gegenübergestellt. Die Berechnung von $\hat{\dot{m}}_{\text{verd}}$ erfolgt gemäß Fig. 6b nach der Formel

$$\hat{\dot{m}}_{\text{verd}} = k_{6.1} \cdot P_{el}^{*2} + k_{6.2} \cdot P_{el}^{*} + k_{6.3} \cdot p_{2'}^{*} + k_{6.4}$$

wobei die Modellparameter $k_{6.1}$, $k_{6.2}$, $k_{6.3}$ und $k_{6.4}$ den fehlerfreien Normalzustand der Brennkraftmaschine beschreiben.

Teilmodell 7:

Wie in der Fig. 7 dargestellt ist der Druck $p_{1'}^{*}$ der Druck unmittelbar nach der Brenngasdosiereinrichtung 2. Dieser Druck enthält die Information über den Druck im Ansaugbereich des Verdichters und wird als Funktion der Motorlast bzw. Motorleistung $P_{el}$ aufgetragen. Bei zunehmender Last wird dieser Unterdruck größer (absolut kleiner). Verändert sich dieser Druck bei gleicher Motorlast, so kann diese Information genutzt werden, um eine Veränderung des Umgebungsdrucks oder eine Verschmutzung des Luftfilters festzustellen. Beides beeinflusst den Arbeitspunkt des Turboladers.
Das Modell für einen Schätzwert $\hat{p}_{1'}$ für den Druck $p_{1}^{*}$, wird durch Minimierung des quadratischen Fehlers (Fitting) einer quadratischen Funktion parametriert:

$$\hat{p}_{1'} = k_{7.1} P_{el}^{*2} + k_{7.2} P_{el}^{*} + k_{7.3}$$

$\hat{p}_{1'}$ wird für die Berechnung des Residuums $r_7$ benötigt.

Teilmodell 8:

Die Berechnung eines Schätzwertes $\hat{p}_{2'}$ für den Ladedruck erfolgt auf Basis der zugeführten Treibgasmenge $\dot{m}_{gas}$ und des eingestellten Zündzeitpunktes $ZZP$, Der Zusammenhang kann durch folgende einfache 3dimensionale Parabel ausreichend genau abgebildet werden:

$$\hat{p}_{2'} = k_{8.1} \dot{m}_{gas}^{2} + k_{8.2} \dot{m}_{gas} + k_{8.3} \dot{m}_{gas} ZZP + k_{8.4} ZZP^{2} + k_{8.5} ZZP + k_{8.6}$$

Die Parameter $k_{6.1}$ bis $k_{6.6}$ werden mittels Least-Squares Fitting angepasst. Dieses Modell ist insbesondere bei einer vollständig geöffneten Drosselklappe 7 heranzuziehen. $\hat{p}_{2'}$ wird bei der Berechnung des Residuums $r_5$ verwendet.

Teilmodell 9:

Im Normalbetrieb des Motors liegt $\lambda_{gem}$ als Stellgröße vor (Luftzahl des Gemisches). Die Einflussgrößen auf die Luftzahl des Motors im Modell sind:

Die aktuelle Last des Motors: $P_{el}$*
Der aktuelle Ladedruck des Motors: $p_2$.*
Der aktuelle Zündzeitpunkt des Motors: ZZP
Diese werden in einem linearen Modell zusammengefasst, dessen Parameter $k_{9.1}$ bis $k_{9.4}$ mittels Least-Square-Fitting optimiert werden. Ein Schätzwert $\hat{\lambda}_{gem}$ kann auf Grundlage der genannten Messwerte und Stellgrößen wie folgt berechnet werden:

$$\hat{\lambda}_{gem} = k_{9.1}P_{el}^* + k_{9.2}p_2^{\cdot} + k_{9.3}\,ZZP + k_{9.4}$$

Mittels $\lambda_{gem}$ und $\hat{\lambda}_{gem}$ kann dann das Residuum $r_a$ berechnet werden.

Auf Grundlage der Teilmodelle 1 bis 9 können fOr die Diagnose der Brennkraftmaschine die Residuen $r_1$ bis $r_8$ gebildet werden.

Modellabweichungen (Residuen):

Dabei ist erfindungsgemäß vorgesehen, dass die mit den Teilmodellen berechneten Schätzwerte als Modellwerte des jeweiligen Betriebsparameters verwendet werden. Für die Residuen wird dann die Abweichung des jeweils gemessenen oder berechneten Ist-Wertes des Betriebsparameters von den Schätz- bzw. Modellwerten bestimmt. Bei dem hier gezeigten Beispiel wird wie folgt vorgegangen:

$r_1$: Differenz zwischen der aktuell gemessenen mittleren Abgastemperatur $T_3$* und der berechneten Abgastemperatur $\hat{T}_3$ aus Teilmodell 1: $r_1 = T_3^{\cdot} - \hat{T}_3$

$r_2$: Differenz zwischen einer gemessenen Einzelzylindertemperatur $T_{3,c}$* und der aktuellen berechneten mittleren Abgastemperatur $\hat{T}_3$ aus Teilmodell 1 und: $r_2 = T_{3,c}^* - \hat{T}_3$

$r_3$: Differenz zwischen der aktuell gemessenen elektrischen Leistung $P_{el}$* und der berechneten elektrischen Leistung $\hat{P}_{el,3}$ aus Teilmodell 2: $r_3 = P_{el}^* - \hat{P}_{el,3}$

$r_4$: Differenz zwischen der aktuell gemessenen elektrischen Leistung $P_{el}$* und der berechneten elektrischen Leistung $\hat{P}_{el,4}$ aus Teilmodell 3: $r_4 = P_{el}^* - \hat{P}_{el,4}$

$r_5$: Differenz zwischen dem aktuell gemessenen Ladedruck $p_2$* und dem nach Gasmenge, Zündzeitpunkt berechneten Ladedruck $\hat{p}_2$' aus Teilmodell 8: $r_5 = p_2^* \, \hat{p}_2.$

$r_6$: Differenz zwischen dem berechneten Ist-Wert des Verdichtermassenstroms $\dot{m}_{verd}$ und dem ebenfalls berechneten Schätzwert $\hat{\dot{m}}_{verd}$ des Verdichtermassenstromes (beides siehe Teilmodell 6):

$$r_6 = \dot{m}_{verd} - \hat{\dot{m}}_{verd}$$

$r_7$: Differenz zwischen dem aktuell gemessenen Druck $p_1$.* nach Gasdosierung und dem Modellwert $\hat{p}_1$ aus Teilmodell 7: $r_7 = p_1^{\cdot} - \hat{p}_1.$

$r_8$: Differenz zwischen der aktuellen Stellgröße $\lambda_{gem}$ und dem mittels Teilmodell 9 berechneten Modellwert $\hat{\lambda}_{gem}$:

$$r_8 = \lambda_{gem} - \hat{\lambda}_{gem}$$

Zu jedem Residuum $r_1$ bis $r_8$ wird ein Toleranzband $\Delta_{tol,l}$ angegeben, das der normalen Abweichung im fehlerfreien Betrieb zwischen Modellwert und dem Messwert $i$ entspricht. Die Toleranzbandbreiten $\Delta_{tol,i}$ werden nach der Parametrierung der Modelle folgendermaßen ermittelt:

Wie in Fig. 8 dargestellt, kommt es auch im fehlerfreien Zustand durch Messrauschen und Modellungenauigkeiten zu Abweichungen zwischen den mittels Teilmodellen berechneten Modellwerten und den Messwerten. Die Toleranzgrenzen $\Delta_{tol,1}$ werden nun so gelegt, dass im fehlerfreien Betrieb keine oder nur selten Überschreitungen entstehen. Diese Toleranzgrenzen werden abgespeichert und im Folgenden für die Feststellung von positiven oder negativen Überschreitungen verwendet. Ist die wie oben berechnete Abweichung für das jeweilige Residuum innerhalb des jeweiligen Toleranzbandes $\Delta_{tol,i}$, so wird dem Residuum in diesem Ausführungsbeispiel der Wert 0 zugeordnet. Liegt eine positive Überschreitung des Toleranzbandes $\Delta_{tol,1}$ in Richtung 11 vor, so erhält das jeweilige Residuum den Wert + 1, bei einer negativen Überschreitung des Toleranzbandes in Richtung 12 den Wert -1.

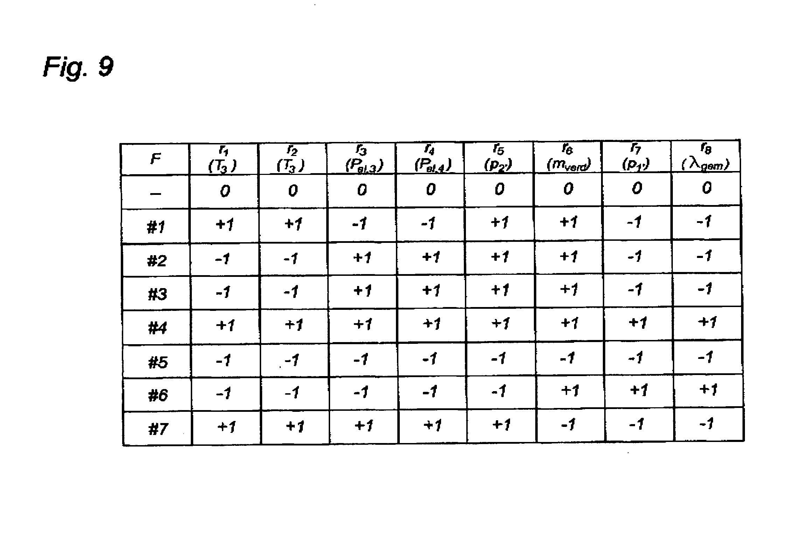

Im Normalbetrieb der Brennkraftmaschine werden die jeweiligen Residuen $r_1$ bis $r_8$ dann, vorzugsweise kontinuierlich, mit beispielhaft in Fig. 9 dargestellten fehlertypischen Gesamtheiten von fehlertypischen Residuen verglichen. Stimmt die Gesamtheit der aktuell bestimmten Residuen $r_1$ bis $r_8$ dann mit einer der fehlertypischen Gesamtheiten einer der Fehler #1 bis #7 überein, so wird dieser Fehler erkannt bzw. diagnostiziert, woraufhin dann die entsprechenden Maßnahmen bzw. Wartungsarbeiten an der Brennkraftmaschine eingeleitet werden können.

**Patentansprüche**

1. Verfahren zur Diagnose von fehlerhaften Betriebszuständen, einer, insbesondere turboaufgeladenen, Brennkraftmaschine, insbesondere eines Gasmotors, **dadurch gekennzeichnet, dass** während des Betriebs der Brennkraftmaschine mindestens zwei, vorzugsweise mehrere, aktuelle Residuen für voneinander verschiedene Betriebsparameter der Brennkraftmaschine bestimmt werden, wobei jedes aktuelle Residuum als Maß für die Abweichung eines Ist-Wertes des jeweiligen Betriebsparameters von einem über eine Modellierung berechneten Modellwert des jeweiligen Betriebsparameters oder als Maß für die Abweichung eines Ist-Wertes des jeweiligen Betriebsparameters von einem Ist-Wert eines anderen Betriebsparameters bestimmt wird, und die Gesamtheit der so bestimmten aktuellen Residuen mit einer Gesamtheit von vorab beim Auftreten eines bekannten fehlerhaften Betriebszustandes bestimmten fehlertypischen Residuen verglichen wird und bei Übereinstimmung der Gesamtheit der aktuellen Residuen mit der Gesamtheit der fehlertypischen Residuen das Auftreten des bekannten fehlerhaften Betriebszustandes diagnostiziert und damit dessen Ursache erkannt wird.

2. Verfahren nach Anspruch 1, **dadurch gekennzeichnet, dass** beim Vergleich der Gesamtheit der aktuellen Residuen mit der Gesamtheit der fehlertypischen Residuen jeweils jedes aktuelle Residuum jedes Betriebsparameters mit dem fehlertypischen Residuum desselben Betriebsparameters verglichen wird.

3. Verfahren nach Anspruch 1 oder 2, **dadurch gekennzeichnet, dass** den aktuellen und den fehlertypischen Residuen jeweils, vorzugsweise genau, drei Werte zugeordnet werden können.

4. Verfahren nach Anspruch 3, **dadurch gekennzeichnet, dass** ein erster der Werte, der dem jeweiligen Residuum zugeordnet werden kann, beschreibt, dass der Ist-Wert des jeweiligen Betriebsparameters innerhalb eines vorgebbaren, um den Modellwert des jeweiligen Betriebsparameters oder den Ist-Wert des anderen Betriebsparameters herum angeordneten, Toleranzbereiches liegt.

5. Verfahren nach Anspruch 3 oder 4, **dadurch gekennzeichnet, dass** ein zweiter der Werte, der dem jeweiligen Residuum zugeordnet werden kann, beschreibt, dass der Ist-Wert des jeweiligen Betriebsparameters oberhalb eines vorgebbaren, um den Modellwert des jeweiligen Betriebsparameters oder den Ist-Wert des anderen Betriebsparameters herum angeordneten, Toleranzbereiches liegt.

6. Verfahren nach einem der Ansprüche 3 bis 5, **dadurch gekennzeichnet, dass** ein dritter der Werte, der dem jeweiligen Residuum zugeordnet werden kann, beschreibt, dass der Ist-Wert des jeweiligen Betriebsparameters unterhalb eines vorgebbaren, um den Modellwert des jeweiligen Betriebsparameters oder den Ist-Wert des anderen Betriebsparameters herum angeordneten, Toleranzbereiches liegt.

7. Verfahren nach einem der Ansprüche 1 bis 6, **dadurch gekennzeichnet, dass** der Ist-Wert des jeweiligen Betriebsparameters ein beim Betrieb der Brennkraftmaschine gemessener Messwert ist oder aus mindestens einem solchen Messwert und/oder aus mindestens einer Stellgröße der Brennkraftmaschine bestimmbar ist.

8. Verfahren nach einem der Ansprüche 1 bis 7, **dadurch gekennzeichnet, dass** die fehlertypischen Residuen bestimmt werden, indem der bekannte fehlerhafte Betriebszustand der Brennkraftmaschine gezielt herbeigeführt wird.

9. Verfahren nach einem der Ansprüche 1 bis 8, **dadurch gekennzeichnet, dass** die Modellwerte des jeweiligen Betriebsparameters den fehlerfreien Betriebszustand der Brennkraftmaschine beschreiben.

10. Verfahren nach einem der Ansprüche 1 bis 9, **dadurch gekennzeichnet, dass** zumindest einer der Betriebsparameter eine mittlere Abgastemperatur ist.

11. Verfahren nach einem der Ansprüche 1 bis 10, **dadurch gekennzeichnet, dass** zumindest einer der Betriebsparameter eine von der Brennkraftmaschine abgegebene, vorzugsweise elektrisch bestimmbare, Leistung ist.

12. Verfahren nach einem der Ansprüche 1 bis 11, **dadurch gekennzeichnet, dass** zumindest einer der Betriebsparameter ein Ladedruck ist.

13. Verfahren nach einem der Ansprüche 1 bis 12, **dadurch gekennzeichnet, dass** zumindest einer der Betriebsparameter ein Verdichtermassenstrom ist.

14. Verfahren nach einem der Ansprüche 1 bis 13, **dadurch gekennzeichnet, dass** zumindest einer der Betriebsparameter ein Druck nach der Brennstoffzuführung, vorzugsweise ein Druck nach der Gasdosierung, ist.

15. Verfahren nach einem der Ansprüche 1 bis 14, **dadurch gekennzeichnet, dass** zumindest einer der Betriebsparameter ein Lambdawert ist.

16. Verfahren nach einem der Ansprüche 1 bis 15, **dadurch gekennzeichnet, dass** mindestens vier, vorzugsweise mindestens sechs, Residuen zur Diagnose eines fehlerhaften Betriebszustandes herangezogen werden.

17. Diagnoseeinrichtung geeignet zur Durchführung eines Verfahrens gemäß den Ansprüchen 1 bis 16.

18. Brennkraftmaschine, insbesondere mit mindestens einem Turbolader, mit einer Diagnoseeinrichtung nach Anspruch 17.

Fig. 1

$$z_1 = ZZP(t - T_s - T_{t1})$$
$$z_2 = ZZP(t - 2T_s - T_{t1})$$
$$z_3 = ZZP(t - 3T_s - T_{t1})$$
$$z_4 = p_2^*(t - T_s - T_{t2})$$
$$z_5 = p_2^*(t - 2T_s - T_{t2})$$
$$z_6 = p_2^*(t - 3T_s - T_{t2})$$
$$z_7 = P_{el}^*(t - T_s - T_{t3})$$
$$z_8 = P_{el}^*(t - 2T_s - T_{t3})$$
$$z_9 = P_{el}^*(t - 3T_s - T_{t3})$$
$$z_{10} = T_3(t - T_s)$$
$$z_{11} = T_3(t - 2T_s)$$
$$z_{12} = T_3(t - 3T_s)$$

$$\hat{T}_3(t)$$

Fig. 2

$$\dot{m}_{Gas}$$

$$ZZP$$

$$\hat{P}_{el,3}$$

Fig. 3

$$p_2^*$$

$$T_2^*$$

$$\hat{P}_{el,4}$$

*Fig. 4*

$\alpha_{DK}$

$p_{2'}^*$

$\hat{p}_2$

*Fig. 5*

$\alpha_{ubv}$
$T_2^*$
$\hat{p}_2$
$p_{2'}^*$

$\dot{m}_{ubv}$

*Fig. 6a*

$p_{2'}^*$
$\dot{m}_{gas}$
$n_{ist}^*$
$T_2^*$
$\dot{m}_{ubv}$

$\dot{m}_{verd}$

*Fig. 6b*

$p_{2'}^*$

$P_{el}^*$

$\hat{\dot{m}}_{verd}$

*Fig. 7*

*Fig. 8*

*Fig. 9*

| $F$ | $r_1$ ($T_3$) | $r_2$ ($T_3$) | $r_3$ ($P_{el,3}$) | $r_4$ ($P_{el,4}$) | $r_5$ ($p_2$) | $r_6$ ($m_{verd}$) | $r_7$ ($p_1$) | $r_8$ ($\lambda_{gem}$) |
|---|---|---|---|---|---|---|---|---|
| — | 0 | 0 | 0 | 0 | 0 | 0 | 0 | 0 |
| #1 | +1 | +1 | -1 | -1 | +1 | +1 | -1 | -1 |
| #2 | -1 | -1 | +1 | +1 | +1 | +1 | -1 | -1 |
| #3 | -1 | -1 | +1 | +1 | +1 | +1 | -1 | -1 |
| #4 | +1 | +1 | +1 | +1 | +1 | +1 | +1 | +1 |
| #5 | -1 | -1 | -1 | -1 | -1 | -1 | -1 | -1 |
| #6 | -1 | -1 | -1 | -1 | -1 | +1 | +1 | +1 |
| #7 | +1 | +1 | +1 | +1 | +1 | -1 | -1 | -1 |

EP 1 878 900 A2